# EUROPEAN PATENT SPECIFICATION

(11) **EP 0 428 404 B1**
(45) Date of publication and mention of the grant of the patent: **27.04.1994**
(21) Application number: 90312430.3
(22) Date of filing: 14.11.1990
(51) Int. Cl.: F16L 19/02, F16L 13/14

(54) **Tube connection**
Rohrverbindung
Raccord de tuyaux

(30) Priority: 15.11.1989 DE 3937888
(43) Date of publication of application: 22.05.1991
(73) Proprietor: BUNDY GmbH, D-69029 Heidelberg (DE)
(72) Inventor: Müffke, Walter, W-6901 Wiesenbach (DE); Goff, Robert W. J., Abingdon, Oxfordshire OX14 5NP (GB)
(74) Representative: Lawrence, Brian Richard

(56) References cited:
- EP-A- 0 247 781
- EP-A- 0 255 221
- DE-C- 3 701 555
- US-A- 1 804 814

## Description

This invention relates to a tube connection for thin-walled, small-calibre metal tubes, in particular for braking, fuel and hydraulic lines on motor vehicles in which each of the metal tubes is provided on the end to be connected with a flange and the metal tubes are enveloped by a sleeve in each case, of which at least one can be deformed by the effect of a contact pressure on the sleeves and thus on the flanges so as to form a sealed connection between the sleeves. Such a tube connection is disclosed in DE 37 01 555 C1.

Tube connections are used in the construction of motor vehicles in positions which are difficult to reach and must be formed in these positions with special tools. The high fluid pressures in the lines require appropriate sealing seats and sufficiently large contact pressures on the sealing seats. In order to facilitate the production of the tube connections, because of the difficulty of reaching their locations, tube connections as aforesaid are known in which permanent deformation is used instead of a screw connection. A non-destructive uncoupling is not possible however on these tube connections.

The object of the invention is to propose a tube connection which can be fitted in a simple manner and which can be separated where necessary in a non-destructive manner.

The tube connection according to the invention is characterised in that at least one of the sleeves is provided with a releasable connection between a part of the sleeve which can be connected to the other sleeve by said deformation and a part of the sleeve which envelops the associated metal tube. In this arrangement the releasable connection consists preferably of a screw connection.

The tube connection according to the invention can also be fitted with a simple tool in positions which are difficult to reach. Moreover the invention also permits the use of assembly robots and the two parts can be joined together before they are brought to the assembly area preferably by mechanical means directly after the production of the two parts.

The tube connection known from German patent specification DE 37 01 555 C1 enables assembly to be carried out in a simple manner in that two sleeves which envelop the flanged tube ends are pressed into each other. A further development of the invention combines the advantages of the known tube connection with those of the tube connection according to the invention in that in a manner known in itself a first sleeve is provided with a larger inside diameter in an area jutting out over the end of the first metal tube enveloped by the first sleeve, this inside diameter being suitable for receiving a second sleeve constructed as a partially thin-walled press bush, in that an annular channel which extends around the inner wall of the first sleeve is opposite the thin-walled part of the press bush, in that the thin-walled part of the press bush can be sufficiently deformed into the annular channel by means of the contact pressure and in that the first sleeve consists of two parts which are connected by a screw connection.

An advantageous embodiment of) this further development consists of the fact that the screw connection in the area of the larger inside diameter of the sleeve is provided in such a way that both parts of the sleeve have in each case a surface which is accessible from the outside. With this arrangement it is particularly advantageous that the parts of the first sleeve have on the outside a hexagonal configuration. This embodiment has the advantage that spanners can easily be used for separating the tube connection.

In accordance with another advantageous embodiment it is arranged that a first part of the first sleeve which envelops the first metal tube is provided at the periphery with an external thread, that a second part of the first sleeve essentially envelops the first part and is provided with an internal thread and that the first part contains recesses for inserting a key on the end face remote from the flange of the first metal tube.

According to the circumstances, this embodiment results in particular in a shorter overall length of the tube connection and although a special key is required for separating the parts, this is advantageous under certain circumstances as the connection according to the invention is frequently used in systems where safety is critical such as the braking system of a motor vehicle. In addition with this arrangement the first part can be provided with a circumferential flange which is adapted to a circumferential recess in the second part. In this way a stop is created when the first part is screwed into the second part, which is advantageous with the production by mechanical means of the parts of the tube connection.

Another further development of the invention consists of the fact that the press bush is provided with a flange at the end projecting from the first sleeve. In this way a greater application surface is created for the tool used for assembly.

Exemplary embodiments of the invention are illustrated in the accompanying drawings and are explained in greater detail in the following description, in which:
Figure 1 shows a longitudinal section through a first embodiment;
Figure 2 shows a longitudinal section of a second embodiment;
Figure 3 is a perspective view of the second embodiment of Figure 2; and
Figure 4 shows a longitudinal section through a third embodiment.

The same parts are shown in the various figures with the same reference numbers.

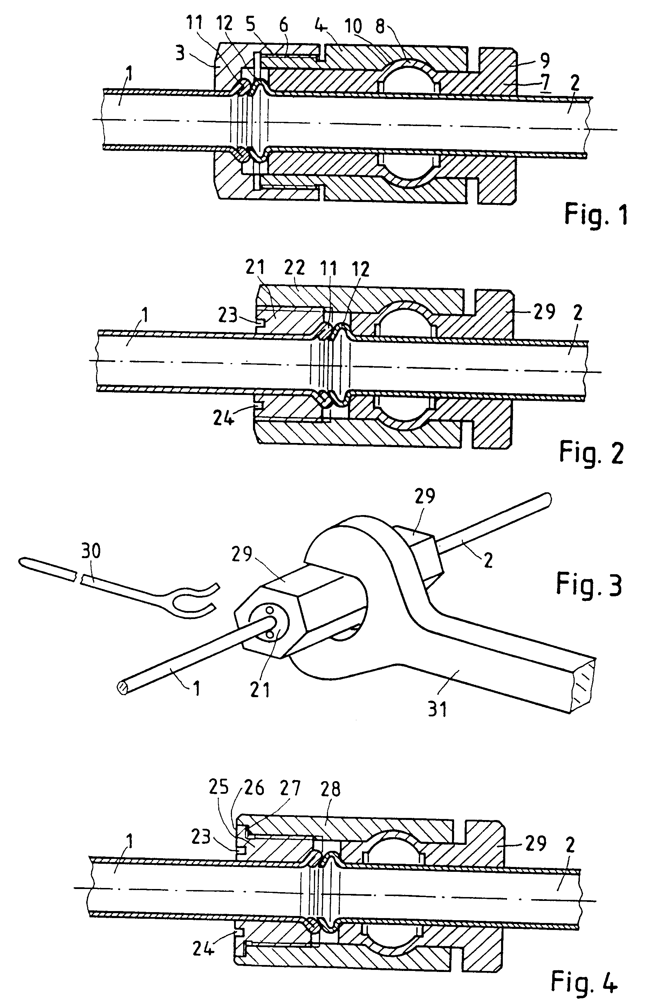

The tube connection shown in Figure 1 is used for connecting a first metal tube 1 having a conical flange 11 to a second metal tube 2 having a conical flange 12. The metal tube 1 is provided with a sleeve consisting of two parts 3 and 4, which in each case are provided with a thread 5 and 6. The external surfaces of the parts 3 and 4 are formed with a hexagonal configuration so that they can accept in each case a spanner.

A partially thin-walled sleeve in the form of a press bush 7 which envelops the metal tube 2 is normally provided with a deformation zone 8, which extends in a straight line in the unfitted condition. The end 9 of the press bush 7 which is remote from the flange 12 is constructed in the form of a flange.

The two-part sleeve envelops the metal tube 1 before assembly whilst the press bush 7 is applied to the metal tube 2. Parts 3 and 4 of the sleeve are preferably already put together in the works immediately after they have been produced. To assemble the connection the sleeve is slid over the press bush 7 until the flanges 11 and 12 are brought up forcefully against each other. The sleeve and the press bush 7 are pressed together axially with a suitable tool so that the deformation zone 8 is deformed in the manner shown and extends into a circumferential annular channel 10 of the sleeve.

To release the connection, parts 3 and 4 of the sleeve are turned against each other, so that the screw connection is released. The parts can thus be released and put together again in a simple manner.

The embodiment shown in Figure 2 is similar to that of Figure 1 except that the screw connection is formed differently between the parts 21 and 22 of the sleeve so that the parts are simpler from a design point of view. As the second part 22 extends over the complete length of the sleeve the first part 21 cannot be handled with a spanner. It is therefore provided with corresponding recesses on the end face remote from the flange 11 which in this case consist of two bores 23 and 24, into which a special key 30 can be inserted. The press bush 29 is somewhat shorter in the second embodiment than on the first embodiment.

Figure 3 shows a perspective view of the second embodiment with indicated tools 30 and 31 for the purpose of releasing and putting together again the two parts 21 and 22 of the sleeve.

In the embodiment shown in Figure 4 the first part 25 of the sleeve is provided with a flange 26 which engages with a circumferential recess 27 of the second part 28. In this way an improved stop for the pre-assembly of the parts 25 and 28 is achieved and, as in the case of the second embodiment, bores 23 and 24 are provided for a special key 30 (Figure 2).

Although being especially applicable to tube connections for braking, fuel and hydraulic lines on motor vehicles, the tube connection of the present invention has much wider application, and may also be used, for example, in refrigeration apparatus.

## Claims

1. Tube connection for thin-walled, small-calibre metal tubes (1, 2), each of the metal tubes (1, 2) being provided on the end to be connected with a flange (11, 12) and the metal tubes (1, 2) being enveloped by a sleeve (3, 4 and 7; 21, 22 and 29; 25, 28 and 29) in each case, of which sleeves at least one (7; 29) can be deformed by the effect of a contact pressure on the sleeves (3, 4 and 7; 21, 22 and 29; 25, 28 and 29) and thus on the flanges (11, 12) so as to form a connection between the sleeves (3, 4 and 7; 21, 22 and 29; 25, 28 and 29), characterised in that at least one of the sleeves (3, 4; 21, 22; 25, 28) is provided with a releasable connection (5, 6) between a part of the sleeve (4, 22, 28) which can be connected to the other sleeve (7, 29) by said deformation and a part of the sleeve (3, 21, 25) which envelopes the associated metal tube (1).

2. Tube connection according to claim 1, characterised in that the releasable connection comprises a screw connection (5, 6).

3. Tube connection according to claim 2, characterised in that in a manner known in itself a first sleeve (3, 4; 21, 22; 25, 28) is provided with a larger inside diameter in an area jutting out over the end of the first metal tube (1) enveloped by the first sleeve (3, 4; 21, 22; 25, 28), this inside diameter being suitable for receiving a second sleeve constructed as a partially thin-walled press bush (7, 29), in that an annular channel (10) which extends around the inner wall of the first sleeve (3, 4; 21, 22; 25, 28) is opposite the thin-walled part (8) of the press bush (7, 29), in that the thin-walled part (8) of the press bush (7, 29) can be sufficiently deformed into the annular channel (10) by means of the contact pressure and in that the first sleeve consists of two parts (3, 4; 21, 22; 25, 28) which are connected by a screw connection.

4. Tube connection according to claim 3, characterised in that the screw connection (5, 6) in the area of the larger inside diameter of the sleeve (3, 4) is provided in such a way that both parts (3, 4) of the sleeve have in each case a surface which is accessible from the outside.

5. Tube connection according to claim 4, characterised in that the parts (3, 4) of the first sleeve have on the outside a hexagonal configuration.

6. Tube connection according to claim 3, characterised in that a first part (21, 25) of the first sleeve which envelops the first metal tube (1) is provided at the periphery with an external thread, in that a second part (22, 28) of the first sleeve essentially envelops the first part (21, 25) and is provided with an internal thread and in that the first part contains recesses (23, 24) for inserting a key on the end face remote from the flange of the first metal tube (1).

7. Tube connection according to claim 6, characterised in that the first part (25) is provided with a circumferential flange (26) which is adapted to be received in a circumferential recess (27) in the second part (28).

8. Tube connection according to claim 3, characterised in that the press bush (7, 29) is provided with a flange at the end (9) projecting from the first sleeve (3, 4; 21, 22; 25, 28).

## Patentansprüche

1. Rohrverbindung für dünnwandige, kleinkalibrige Metallrohre (1,2), wobei jedes der Metallrohre (1, 2) an dem zu verbindenden Ende mit einem Bördel (11, 12) versehen ist und die Metallrohre (1, 2) von je einer Hülse (3, 4 und 7; 21, 22 und 29; 25, 28 und 29) umfaßt werden, von denen mindestens eine (7; 29) durch die Wirkung einer Anpreßkraft auf die Hülsen (3, 4 und 7; 21, 22 und 29; 25, 28 und 29) und damit auf die Bördel (11, 12) zur Bildung einer Verbindung zwischen den Hülsen (3, 4 und 7; 21, 22 und 29; 25, 28 und 29) verformbar ist, dadurch gekennzeichnet, daß mindestens eine der Hülsen (3, 4; 21, 22; 25, 28) mit einer lösbaren Verbindung (5, 6) zwischen einem Teil der Hülse (4, 22, 28), das mit der anderen Hülse (7, 29) durch besagte Verformung verbindbar ist, und einem das Metallrohr (1) umfassenden Teil der Hülse (3, 21, 25) versehen ist.

2. Rohrverbindung nach Anspruch 1, dadurch gekennzeichnet, daß die lösbare Verbindung eine Schraubverbindung (5, 6) enthält.

3. Rohrverbindung nach Anspruch 2, dadurch gekennzeichnet, daß in an sich bekannter Weise eine erste Hülse (3, 4; 21, 22; 25, 28) in einem über das Ende des von der ersten Hülse (3, 4; 21, 22; 25, 28) umfaßten ersten Metallrohres (1) hinausragenden Bereich einen größeren Innendurchmesser aufweist, der zur Aufnahme der als teilweise dünnwandige Preßbuchse (7, 29) ausgebildeten zweiten Hülse geeignet ist, daß dem dünnwandigen Teil (8) der Preßbuchse (7, 29) ein an der Innenwand der ersten Hülse (3, 4; 21, 22; 25, 28) umlaufender Ringkanal (10) gegenübersteht, daß durch die Anpreßkraft der dünnwandige Teil (8) der Preßbuchse (7, 29) in den Ringkanal (10) hineinreichend verformbar ist, und daß die erste Hülse aus zwei durch eine Schraubverbindung verbundenen Teilen (3, 4; 21, 22; 25, 28) besteht.

4. Rohrverbindung nach Anspruch 3, dadurch gekennzeichnet, daß die Schraubverbindung (5, 6) im Bereich des größeren Innendurchmessers der Hülse (3, 4) derart vorgesehen ist, daß beide Teile (3, 4) der Hülse je eine von außen zugängliche Mantelfläche aufweisen.

5. Rohrverbindung nach Anspruch 4, dadurch gekennzeichnet, daß die Teile (3, 4) der ersten Hülse außen die Form von Sechskantzylindern aufweisen.

6. Rohrverbindung nach Anspruch 3, dadurch gekennzeichnet, daß ein erstes, das erste Metallrohr (1) umfassendes Teil (21, 25) der ersten Hülse am Umfang mit einem Außengewinde versehen ist, daß ein zweites Teil (22, 28) der ersten Hülse das erste Teil (21, 25) im wesentlichen umfaßt und mit einem Innengewinde versehen ist und daß das erste Teil an der von dem Bördel des ersten Metallrohres (1) abgewandten Stirnfläche Vertiefungen (23, 24) zum Einsetzen eines Schlüssels enthält.

7. Rohrverbindung nach Anspruch 6, dadurch gekennzeichnet, daß das erste Teil (25) mit einem umlaufenden Flansch (26) versehen ist, der an eine umlaufende Ausnehmung (27) im zweiten Teil (28) angepaßt ist.

8. Rohrverbindung nach Anspruch 3, dadurch gekennzeichnet, daß die Preßbuchse (7, 29) an dem aus der ersten Hülse (3, 4; 21, 22; 25, 28) herausstehenden Ende (9) mit einem Flansch versehen ist.

## Revendications

1. Raccord pour tubes métalliques (1, 2) à paroi mince et de petit diamètre, chacun des tubes métalliques (1, 2) ayant, à l'extrémité à raccorder, une collerette (11, 12), les tubes métalliques (1, 2) étant enveloppés par des manchons (3, 4 et 7 ; 21, 22 et 29 ; 25, 28 et 29), l'un au moins des manchons (7 ; 29) pouvant subir une déformation sous l'action d'une pression de contact appliquée aux manchons (3, 4 et 7 ; 21, 22 et 29 ; 25, 28 et 29) et ainsi aux collerettes (11, 12) afin qu'un raccord soit formé entre les manchons (3, 4 et 7 ; 21, 22 et 29 ; 25, 28 et 29), caractérisé en ce que l'un au moins des manchons (3, 4 ; 21, 22 ; 25, 28) comporte une connexion temporaire (5, 6) formée entre une partie du manchon (4, 22, 28) qui peut être raccordée à un autre manchon (7, 29) par ladite déformation et une partie du manchon (3, 21, 25) qui enveloppe le tube métallique associé (1).

2. Raccord pour tubes selon la revendication 1, caractérisé en ce que le raccord temporaire comporte un raccord vissé (5, 6).

3. Raccord pour tubes selon la revendication 2, caractérisé en ce que, d'une manière connue en elle-même, un premier manchon (3, 4 ; 21, 22 ; 25, 28) est réalisé avec un diamètre interne accru dans une région qui est en saillie sur l'extrémité du premier tube métallique (1) enveloppée par le premier manchon (3, 4 ; 21, 22 ; 25, 28), ce diamètre interne convenant au logement d'un second manchon construit sous forme d'une douille de pression (7, 29) à paroi partiellement mince, en ce qu'un canal annulaire (10) disposé autour de la paroi interne du premier manchon (3, 4 ; 21, 22 ; 25, 28) est placé en face de la partie à paroi mince (8) de la douille de pression (7, 29), en ce que la partie à paroi mince (8) de la douille de pression (7, 29) peut être suffisamment déformée dans le canal annulaire (10) par la pression de contact, et en ce que le premier manchon est constitué de deux parties (3, 4 ; 21, 22 ; 25, 28) qui sont raccordées par un raccord vissé.

4. Raccord pour tubes selon la revendication 3, caractérisé en ce que le raccord vissé (5, 6), dans la région de diamètre interne relativement grand du manchon (3, 4), est réalisé afin que les deux parties (3, 4) du manchon aient dans chaque cas une surface qui est accessible depuis l'extérieur.

5. Raccord pour tubes selon la revendication 4, caractérisé en ce que les parties (3, 4) du premier manchon ont une configuration hexagonale à l'extérieur.

6. Raccord pour tubes selon la revendication 3, caractérisé en ce qu'une première partie (21, 25) du premier manchon qui enveloppe le premier tube métallique (1) est munie à sa périphérie d'un filetage, en ce qu'une seconde partie (22, 28) du premier manchon enveloppe pratiquement la première partie (21, 25) et a un taraudage, et en ce que la première partie contient des cavités (23, 24) destinées à l'introduction d'une clavette à la face d'extrémité distante de la collerette du premier tube métallique (1).

7. Raccord pour tubes selon la revendication 6, caractérisé en ce que la première partie (25) possède une collerette circonférentielle (26) qui est destinée à se loger dans une cavité circonférentielle (27) de la seconde partie (28).

8. Raccord pour tubes selon la revendication 3, caractérisé en ce que la douille de pression (7, 29) a une collerette à l'extrémité (9) qui dépasse du premier manchon (3, 4 ; 21, 22 ; 25, 28).
